# EUROPEAN PATENT SPECIFICATION

(11) **EP 2 914 122 B1**
(45) Date of publication and mention of the grant of the patent: **15.03.2017**
(21) Application number: 14780616.0
(22) Date of filing: 12.09.2014
(51) Int. Cl.: A23J 1/14, A23K 10/37, A23K 20/147, A23K 50/75, A23K 50/30, A23K 50/80

(54) **PROCESS FOR PREPARING HIGH PROTEIN SUNFLOWER MEAL FRACTION**
VERFAHREN ZUR HERSTELLUNG EINER PROTEINREICHEN SONNENBLUMENMEHLFRAKTION
PROCÉDÉ DE PRÉPARATION DE FRACTION DE FARINE DE TOURNESOL À FORTE TENEUR EN PROTÉINES

(30) Priority: 13.09.2013 EP 13184270
(43) Date of publication of application: 09.09.2015
(73) Proprietor: Bunge Global Innovation, LLC., White Plains NY 10606 (US)
(72) Inventor: DRAGANOV, Lyubomir Krustev, 5800 Pleven (BG)
(74) Representative: Agasse, Stéphane
(86) International application number: PCT/IB2014/064463
(87) International publication number: WO 2015/036966

(56) References cited:
- DE-A1-102009 032 931
- DE-A1-102011 116 564
- US-A- 3 895 003
- US-A1- 2004 146 628
- LEVIC J ET AL: "REMOVAL OF CELLULOSE FROM SUNFLOWER MEAL BY FRACTIONATION", JOURNAL OF THE AMERICAN OIL CHEMISTS' SOCIETY, SPRINGER, DE, vol. 69, no. 9, 1 September 1992 (1992-09-01), pages 890-893, XP001094058, ISSN: 0003-021X, DOI: 10.1007/BF02636339
- DATABASE EPODOC [Online] EUROPEAN PATENT OFFICE, THE HAGUE, NL; XP002719683, Database accession no. BG-11048909-A cited in the application & BG 110 489 A (DRAGANOV LYUBOMIR [BG]) 31 May 2011 (2011-05-31) cited in the application

## Description

The present invention relates to a new process for preparing high protein sunflower meal fraction.

In animal nutrition, high quantities of proteins are needed. Proteins or protein carriers of plant origin can be used. Among the possible plant protein carriers are soy, rape, sunflowers, palm kernel, other oily fruits, lupines, pod fruits such as feed peas, field beans, and residues from starch production, such as corn gluten.

Among the aforementioned protein carriers, soy products make up about 50% of the market. The use of soybean meal indeed presents several advantage among which its high protein content, its low crude fiber content or its optimal amino acid structure. However, a large proportion of soy products are of genetically modified origin (GMO), which is not authorised everywhere, in particular in Europe for all species. Furthermore, the preparation of high protein soybean meal fractions requires heat treatments to deactivate antinutritional substances such as trypsin inhibitors, saponines and glycosids. Finally, for regions such as Europe, production of soybean meal is insufficient and importation from foreign countries is necessary, thus increasing the final costs of the product.

Alternative protein carriers would therefore be useful.

Sunflower meal is obtained from sunflower seed after oil extraction. Depending on the extraction method, the meal may be expelled or solvent extracted. Solvent extracted meal can be obtained from expeller processed meal by further extraction of oil by a solvent such as hexane. Thus prepared sunflower meal is low in energy and contains low amount of protein, generally between 25 and 28 %. On the contrary, sunflower meal contains high amount of crude fiber, generally more than 20%.
One way traditionally used to increase protein level and reduce fibers content in sunflower meal fractions is to dehull prior to extraction. Using such method allows obtaining fractions containing up to 34 to 38 % of proteins and about 15 % of fibers. Nonetheless, thus obtained fraction meal can only be used as such for feeding animals only in a limited amount. In particular, sunflower meal of such quality cannot be used as an alternative to soybean meal for feeding young birds (i.e. birds in their adolescence and growing period), mammals and fish.

In the past, processes have been disclosed for preparing enriched protein fraction of sunflower meal. Hungarian patent application HU 224456 discloses a process in which the part of the extracted grit, mainly that of sunflower seed, can be separated by crushing and sizing to a fine fraction of high protein content and to a coarse fraction containing high amount of fibers. The process disclosed in this patent application mainly consists in a fine crushing of the extracted grit to obtain two aggregations with particles of different sizes and forms, one third of the total mass of said particles having a size under 400 µm, said aggregations being then separated in one step only by sizing. Nevertheless, the protein content of thus obtained fractions does not exceed 40%.

International patent application WO-A-2013/057149 discloses a process for separating sunflower extraction meal into at least one fraction with high protein and at least one fraction of high cellulose content. The process disclosed in this patent application mainly consists in at least two protein separation steps by means of fluted rollers or hammer blow or impact mills with impact stress of the starting material in a short time cycle, followed by sieving and sifting, and collecting the sieved material. Despite it is mentioned that the protein content of thus obtained fractions could exceed 40%, no experimental result supports this assertion.

Bulgarian patent application BG 110489 discloses a method for increasing protein content in sunflower groats. The process disclosed in this patent application comprises the following steps:
- grinding large agglomerated particles to a size under 5 mm;
- sorting granulometric fractions;
- consecutive grinding of the agglomerated groat particles so as to prepare a mixture of particles enriched in protein, as well as particles with increased content of raw fibers;
- separation of the particles having high protein content from the particles having high content of raw fibers by sieving.
As a result, the process allows increasing the protein content in sunflower groats from 35% to 37% to 41% to 42%.

German patent application DE 10 2009 032 931 teaches to a method for waste-free preparation of extraction meal from sunflower seed in which the extraction meal is divided by at least a single screening and subsequent single air separation into a first fraction with high raw protein and low raw fibre content and a second fraction with low raw protein and high raw fibre content. This document teaches in particular a process for a waste-free treatment of extraction meal from sunflower seed, in which the extraction meal is divided by at least a single screening and subsequent single air separation into a first fraction with high raw protein and low raw fibre content, and a second fraction with low raw protein and high raw fibre content, characterised in that the extraction meal is first subjected to an at least single-stage coarse screening in which the coarser particles of the extraction meal which do not pass the coarse screening are added directly to the second fraction, and the finer particles of the extraction meal which pass the coarse screening are subjected to a multistage fine screening by grain size, in which the particles are separated into several grain size fractions and then each of these grain size fractions is separately subjected to air separation, in which the grain size fraction is separated into specifically lighter and specifically heavier particles, and then the specifically lighter particles of all grain size fractions are added to the second fraction and the specifically heavier particles are added to the first fraction. It is further specified that the first fraction is a (GMO-free) protein carrier for poultry, pigs, fish, domestic animals which comprises around 46-48% raw protein.

Levic et al. report in "Removal of Cellulose from Sunflower Meal by Fractionation (JAOCS, Vol.69, No.9, September 1992, pages 890-893) experiments conducted to fraction sunflower meal for removing cellulose. The authors report in particular (that fractionation of the meals was carried out in a semi-industrial separator, consisting of a fixed centrifugal screen and a rotor for conveying and loosening the meal. The most efficient fractionation procedures rendered high-yields of attractive protein fractions that contained 44.0 to 47.5% crude protein.

Nevertheless, for animal feed purpose, it would be useful to obtain sunflower meal fractions containing at least 50% of proteins and 10% or less of crude fibers so that it can be used as an alternative to soy meal in animal feed.

It has now been found a process which allows preparing sunflower meal fractions containing at least 50% of proteins and less than 10% of crude fibers in a yield that remains acceptable at an industrial scale (e.g. more than 50% yield).

Accordingly, the present invention relates to a process for preparing a sunflower meal fraction F containing at least 50% of proteins and 10% or less of crude fibers comprising the following steps:
a) preparation of a starting material by deagglomeration of a sunflower meal containing at least 30% of protein and having a moisture content of less than 12% into particles smaller than 5 mm;
b) successive sieving of obtained starting material to obtain at least the following fractions:
   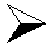 fraction F-b1 in which size of particles is of from d1 to d2;
   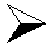 fraction F-b2 in which size of particles is of from d3 to d1;
   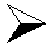 fraction F-b3 in which size of particles is smaller than d3;
c) deagglomeration and successive sieving of fraction F-b1 to obtain at least the following fractions:
   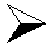 fraction F-c1 in which size of particles is of from d4 to d5;
   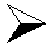 fraction F-c2 in which size of particles is smaller than d4;
d) air sieving of fractions F-b2 and F-c1 to obtain at least the following fractions:
   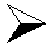 fraction F-d1 in which size of particles is greater than d6;
   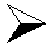 fraction F-d2 in which size of particles is of from d7 to d6;
   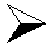 fraction F-d3 in which size of particles is smaller than d7;
e) deagglomeration and successive sieving of
   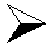 fraction F-d1 to obtain a fraction F-e1 in which size of particles is smaller than d8; and/or
   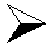 fraction F-d2 to obtain a fraction F-e2 in which size of particles is smaller than d9; and/or
   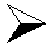 fraction F-d3 to obtain a fraction F-e3 in which size of particles is smaller than d10;
f) and mixing fractions F-b3, F-c2, F-e1 and/or F-e2 and/or F-e3 to obtain fraction F; wherein
   - d1 is of from 600 µm to 1600 µm;
   - d2 is of from 2000 µm to 5000 µm;
   - d3 is of from 150 µm to 500 µm;
   - d4 is of from 150 µm to 500 µm;
   - d5 is of from 600 µm to 1600 µm;
   - d6 is of from 800 µm to 1000 µm;
   - d7 is of from 500 µm to 750 µm;
   - d8 is of from 200 µm to 600 µm;
   - d9 is of from 200 µm to 600 µm; and
   - d10 is of from 200 µm to 600 µm.

The process according to the present invention allows preparing sunflower meal fractions containing at least 50% of proteins and less than 10% of crude fibers in a yield that remains acceptable at an industrial scale (e.g. more than 50% yield). This process is based on particles shape and size differences between protein fractions and crude fiber fractions.

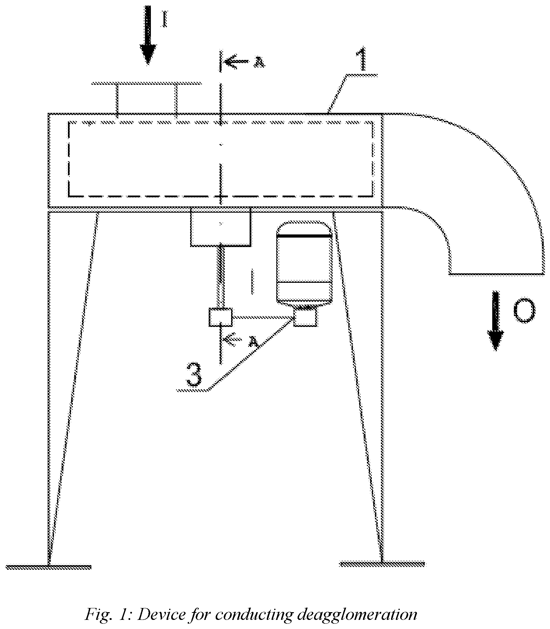

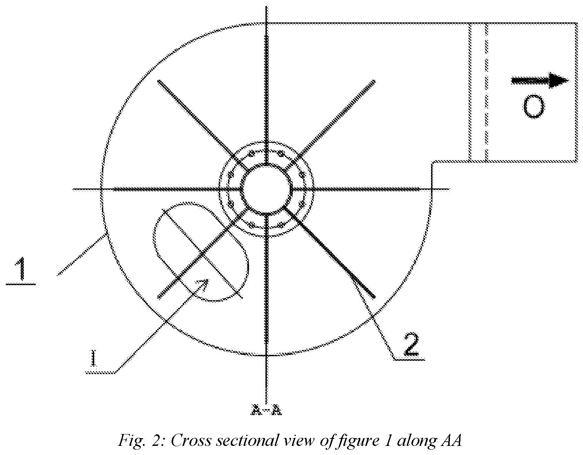

In the context of the present invention "deagglomeration" means a process of breaking up into smaller sized particles some particles that have agglomerated, or aggregated, or clustered together. When applied to sunflower meal agglomerates, it allows breaking up or dispersing said agglomerates into their primary components (i.e. protein kernels and sunflower husks rich in crude fiber).
In the process according to the present invention, deagglomeration may for example be conducted using a device as represented in Figures 1 and 2.
Deagglomeration may also be conducted by using classical roller mill device. Example of suitable roller mill device that can be used in the process according to the present invention includes a roller mill containing four shaft smooth rollers turning at different speed.

In the context of the present invention, "sieving" means separation of different particles of a composition into fractions with a defined granulometry using a set of different sieves. In the process according to the present invention, sieving allows separating sunflower fractions into at least two fractions: one fraction enriched in proteins and one fraction enriched in crude fiber.
In the process according to the present invention, sieving may for example be conducted by using classical device such a plansifter ('Plansichter').

In the context of the present invention, "air sieving" means separation of specific fractions of a composition into particles of different sizes and different relative weight by using a sieve combined with fluidised air bed obtained by using a air stream blowing the particles from the bottom to the top.
In the process according to the present invention, air sieving allows separating sunflower fractions into at least two fractions: one fraction enriched in proteins (i.e. the fraction falling down at the bottom) and one fraction enriched in crude fiber (i.e. the fraction above the sieve).
Example of device for conducting air sieving according to the present invention includes "semolina-machine" used in milling industry for classifying wheat semolina.

In the context of the present invention "crude fibers" means fibers that are made up primarily of plant structural carbohydrates such as cellulose, hemicellulose and lignin.

In the context of the present invention:
- "size of particles" means the Dv90 that corresponds to the maximum particle "diameter" below which 90% of the sample volume exists. In the situation where a particle is spherical, said diameter corresponds to the diameter of said sphere. In the situation where a particle is irregular in shape and/or non-spherical, said diameter corresponds to the diameter of an imaginary sphere possessing the same weight as said particle. The particle size can be measured with any appropriate device such as an analyser sold by Retsch (e.g. Camsizer, Camsizer XT or Horiba);
- "dry weight" of a composition refers to the weight of a composition from which all water has been removed; and
- unless otherwise specified all % values correspond to percentages by weight relative to the total dry weight of the composition in question.

The process according to the present invention allows preparing a sunflower meal fraction F containing at least 50% of proteins and less than 10% of crude fibers in a yield that remains acceptable at an industrial scale. The process according to the present invention can be applied after the deoiled meal production.

In the process according to the present invention, starting material is prepared by deagglomeration of a sunflower meal containing at least 30% of protein and having a moisture content of less than 12% into particles smaller than 5 mm (step a)). Preferably, step a) of the process according to the present invention is conducted under the following conditions, taken alone or in combination:
- sunflower meal is deagglomerated using the device of Figures 1 and 2;
- sunflower meal is deagglomerated into particles smaller than 4 mm, more preferably smaller than 3 mm;
- sunflower meal contains at least 34% of protein, more preferably at least 36% of protein, even more preferably more than 40% of protein; and/or
- sunflower meal has a moisture content of less than 10%, more preferably of less than 8%.

The process according to the present invention allows preparing sunflower meal fractions F-b1 to F-b3 in which diameters of particles may vary depending on the opening size of sieves (step b)). Preferably, step b) of the process according to the present invention allows preparing fractions F-b1 to F-b3 in which diameters of particles (d1 to d3) are chosen independently of each other or in combination as being:
- d1 is of from 650 µm to 1200 µm, more preferably of from 700 µm to 900 µm;
- d2 is of from 2500 µm to 4000 µm, more preferably of from 2750 µm to 3250 µm; and/or
- d3 is of from 150 µm to 450 µm, more preferably of from 200 µm to 400 µm.

The process according to the present invention allows preparing sunflower meal fractions F-c1 and F-c2 after deagglomeration and successive sieving of fraction F-b1, in which diameters of particles may vary depending on the opening size of sieves (step c)).
Preferably, fraction F-b1 is deagglomerated using a roller mill device containing four shaft smooth rollers turning at different speed.
Preferably, step c) of the process according to the present invention allows preparing fractions F-c1 and F-c2 in which diameters of particles (d4 and d5) are chosen independently of each other or in combination as being:
- d4 is of from 150 µm to 450 µm, more preferably of from 200 µm to 400 µm; and/or
- d5 is of from 700 µm to 1500 µm, more preferably of from 750 µm to 1400 µm.

The process according to the present invention allows preparing sunflower meal fractions F-d1 to F-d3 in which diameters of particles may vary depending on the opening size of sieves (step d)). Preferably, step d) of the process according to the present invention allows preparing fractions F-d1 to F-d3 in which diameters of particles (d6 and d7) are chosen independently of each other or in combination as being:
- d6 is of from 800 µm to 900 µm;
- d7 is of from 600 µm to 700 µm;

The process according to the present invention allows preparing sunflower meal fractions F-e1, F-e2 and/or F-e3 after deagglomeration and successive sieving of fractions F-d1, F-d2 and/or F-d3, in which diameters of particles may vary depending on the opening size of sieves (step e)).
Preferably, fractions F-d1, F-d2 and/or F-d3 are deagglomerated using a roller mill device containing four shaft smooth rollers turning at different speed.
Preferably, step e) of the process according to the present invention allows preparing fractions F-e1, F-e2 and/or F-e3 in which diameters of particles (d8 to d10) are chosen independently of each other or in combination as being:
- d8 is of from 200 µm to 550 µm, more preferably of from 250 µm to 550 µm;
- d9 is of from 200 µm to 550 µm, more preferably of from 250 µm to 550 µm; and/or
- d10 is of from 200 µm to 550 µm, more preferably of from 250 µm to 550 µm.

Figure 1 illustrates an example of specific device for conducting deagglomeration of sunflower meal agglomerates. Figure 2 is a cross sectional view along AA of Figure 1. Agglomerates are introduced via the upper part of the device (inlet) and are collided with the inner wall of the housing (1) under a set of high speed rotating plates (2) powered by a drive unit (3). Agglomerates are thus broken thanks to the shear force and collected (outlet).

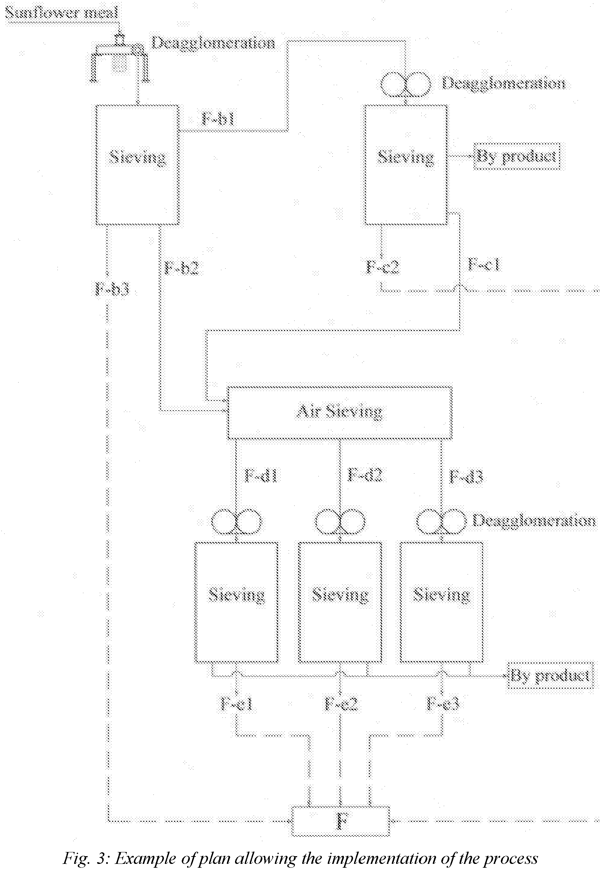

Figure 3 illustrates an example of plan allowing the implementation of the process according to the present invention. In this figure, "by products" corresponds to subfractions enriched in crude fibers that are not used for constituting fraction F.

The present invention relates to a process for preparing a sunflower meal fraction F containing at least 50% of proteins and less than 10% of crude fibers. Thus obtained sunflower meal fraction is novel. Accordingly, the present invention also relates to a sunflower meal fraction obtainable by the process as defined above, said sunflower meal fraction containing at least 50% of proteins and less than 10% of crude fibers.

Preferably, sunflower meal fraction according to the present invention presents the following characteristics, taken alone or in combination:
- sunflower meal fraction at least 52% of proteins. More preferably, sunflower meal fraction contains at least 54% of proteins;
- sunflower meal fraction contains less than 9% of crude fibers. More preferably, sunflower meal fraction contains less than 8% of crude fibers. Even more preferably sunflower meal fraction contains less than 7% of crude fibers;
- diameters of particles of sunflower meal fraction is of from 200 µm to 600 µm.

Sunflower fraction according to the present invention is particularly useful for animal feed purpose and for replacing soybean meal. Accordingly, the present invention also relates to the use of a sunflower meal fraction as defined above for feeding animal, in particular poultry, aquaculture and pork.

The present invention will now be illustrated in a non-limiting manner by the following example.

### Example of process according to the present invention

### Raw material

23440 kg of a dehulled sunflower meal containing 37.47% of crude protein and 17.61% of crude fibre and having a moisture content of 9% was used as a raw material.

### Process

### Step a)

Above raw material was stored in concrete cells. It was introduced in a device according to Figure 1 by a screw conveyor where the first deagglomeration took place in a breaker operating at a rotation speed of rotating plates of 49 m/s so as to reduce size of particles below 3 mm.

### Step b)

By using a vertical conveyor elevator, the obtained fraction was weighted on scales and were introduced (using a screw conveyor) into a 'Plansichter' comprising about 20 sieves.
Obtained particles were screened so that particles remaining bigger than 3mm were reintroduced into step a).
Particles smaller than 3 mm were separated into 3 fractions:
- particles bigger than 800 µm (fraction Fb-1);
- particles smaller than 800 µm but bigger than 375 µm (fraction Fb-2);
- particles smaller than 375 µm (fraction Fb-3).

### Step c)

Above fraction Fb-1 was introduced into a roller mill with an operated pressure of 6 Bar and a ratio of transmission of 1:2.5 between the 2 shafts taking care of preventing major hacking of sunflower meal shells and get the maximum deagglomeration and separation between protein and fibres.

Obtained particles were sieved using a 'Plansichter' as in step b) and separated into 3 fractions:
- particles bigger than 800 µm (fraction Fc-1) were ;
- particles smaller than 800 µm but bigger than 280 µm (fraction Fc-2);
- particles smaller than 280 µm (fraction Fc-3).

Fraction Fc-1 was reintroduced into a roller mill with an operated pressure of 6 Bar and a ratio of transmission of 1:2.5 taking care of preventing major hacking of sunflower meal shells and get the maximum deagglomeration and separation between protein and fibres.
Obtained particles were sieved using a Plansichter as in step b) and thus separated into 3 fractions:
- particles bigger than 800 µm (fraction Fc-4) were ;
- particles smaller than 800 µm but bigger than 375 µm (fraction Fc-5);
- particles smaller than 375 µm (fraction Fc-6).

### Step d)

Above fractions Fb-2, Fc-2 and Fc-5 were treated by an air sieving in a "semolina-machine". An air flow of 55 m³/min was applied.

Particles were thus separated into 3 fractions:
- particles bigger than 850 µm (fraction Fd-1);
- particles smaller than 850 µm but bigger than 800 µm (fraction Fd-2);
- particles smaller than 800 µm (fraction Fd-3).

### Step e)

Above fraction Fd-1 was introduced into to a roller miller for a further deagglomeration.
Obtained particles were sieved using a 'Plansichter' as in step b) and thus separated into 3 fractions:
- particles bigger than 530 µm (fraction Fe-1)
- particles smaller than 530 µm but bigger than 375 µm (fraction Fe-2)
- particles smaller than 375 µm (fraction Fe-3)

Above fraction Fd-2 was introduced into to a roller miller for a further deagglomeration.
Obtained particles were sieved using a 'Plansichter' as in step b) and thus separated into 3 fractions:
- particles bigger than 800 µm (fraction Fe-4)
- particles smaller than 800 µm but bigger than 355 µm (fraction Fe-5)
- particles smaller than 355 µm (fraction Fe-6)

Above fraction Fd-3 was introduced into to a roller miller for a further deagglomeration.
Obtained particles were sieved using a 'Plansichter' as in step b) and thus separated into 3 fractions:
- particles bigger than 800 µm (fraction Fe-7)
- particles smaller than 800 µm but bigger than 355 µm (fraction Fe-8)
- particles smaller than 355 µm (fraction Fe-9)

### Final products

Three final fractions were finally obtained:
- fraction C1 made of Fb-3, Fc-3, Fe-3, Fe-6 and Fe-9;
- fraction C2 made of Fe-2, Fe-5 and Fe-8; and
- fraction C3 made of Fc-4, Fe-1, Fe-4 and Fe-7.

| **Fraction** | **Dry matter** | **Protein in Dry** | **Fibre in Dry** | **Yield** |
|---|---|---|---|---|
| C1 | 91.70% | 48.00-50.00 % | 8.2% | 15600 Tons |
| C2 | 91.50% | 23.80% | 33.81% | 4800 Tons |
| C3 | 91.20% | 15.68% | 40.70 % | 2534 Tons |

## Claims

1. A process for preparing a sunflower meal fraction F containing at least 50% by weight relative to the total dry weight of the fraction of proteins and 10% by weight relative to the total dry weight of the fraction or less of crude fibers comprising the following steps:
a) preparation of a starting material by deagglomeration of a sunflower meal containing at least 30% by weight relative to the total dry weight of the meal of protein and having a moisture content of less than 12% into particles smaller than 5 mm;
b) successive sieving of obtained starting material to obtain at least the following fractions:
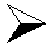 fraction F-b1 in which size of particles is of from d1 to d2;
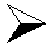 fraction F-b2 in which size of particles is of from d3 to d1; and
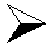 fraction F-b3 in which size of particles is smaller than d3;
c) deagglomeration and successive sieving of fraction F-b1 to obtain at least the following fractions:
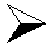 fraction F-c1 in which size of particles is of from d4 to d5; and
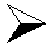 fraction F-c2 in which size of particles is smaller than d4;
d) air sieving of fractions F-b2 and F-c1 to obtain at least the following fractions:
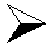 fraction F-d1 in which size of particles is greater than d6;
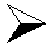 fraction F-d2 in which size of particles is of from d7 to d6; and
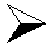 fraction F-d3 in which size of particles is smaller than d7;
e) deagglomeration and successive sieving of
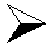 fraction F-d1 to obtain a fraction F-e1 in which size of particles is smaller than d8; and/or
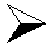 fraction F-d2 to obtain a fraction F-e2 in which size of particles is smaller than d9; and/or
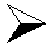 fraction F-d3 to obtain a fraction F-e3 in which size of particles is smaller than d10;
f) and mixing fractions F-b3, F-c2, F-e1 and/or F-e2 and/or F-e3 to obtain fraction F;
wherein
- d1 is of from 600 µm to 1600 µm;
- d2 is of from 2000 µm to 5000 µm;
- d3 is of from 150 µm to 500 µm;
- d4 is of from 150 µm to 500 µm;
- d5 is of from 600 µm to 1600 µm;
- d6 is of from 800 µm to 1000 µm;
- d7 is of from 500 µm to 750 µm;
- d8 is of from 200 µm to 600 µm;
- d9 is of from 200 µm to 600 µm; and
- d10 is of from 200 µm to 600 µm.
and wherein the size of particles corresponds to Dv90.

2. A process according to claim 1, **characterised in that** the sunflower meal is deagglomerated into particle smaller than 3 mm.

3. A process according to claim 1 or 2, **characterised in that** the sunflower meal has a moisture content of less than 10%.

4. A process according to any of claims 1 to 3, **characterised in that** sunflower meal contains at least 34% of protein

5. A process according to any of claims 1 to 4, **characterised in that**:
- d1 is of from 650 µm to 1200 µm;
- d2 is of from 2500 µm to 4000 µm; and
- d3 is of from 150 µm to 450 µm.

6. A process according to any of claims 1 to 5, **characterised in that**:
- d4 is of from 150 µm to 450 µm; and
- d5 is of from 700 µm to 1500 µm.

7. A process according to any of claims 1 to 6, **characterised in that**:
- d6 is of from 800 µm to 900 µm; and
- d7 is of from 600 µm to 700 µm.

8. A process according to any of claims 1 to 7, **characterised in that** d8 is of from 200 µm to 550 µm.

9. A process according to any of claims 1 to 8, **characterised in that** d9 is of from 200 µm to 550 µm.

10. A process according to any of claims 1 to 9, **characterised in that** d10 is of from 200 µm to 550 µm.

11. Sunflower meal fraction obtainable by process according to claim 1 containing at least 50% by weight relative to the total dry weight of the fraction of proteins and less than 10% by weight relative to the total dry weight of the fraction of crude fibers.

12. Sunflower meal fraction according to claim 11, **characterised in that** it contains at least 52% of proteins.

13. Sunflower meal fraction according to claim 11 or 12, **characterised in that** it contains less than 8% of crude fibers.

14. Sunflower meal fraction according to any of claims 11 to 13, **characterised in that** diameters of particles of said fraction is of from 200 µm to 600 µm.

15. Use of a sunflower meal fraction according to any of claims 11 to 14 for feeding animal.

## Patentansprüche

1. Verfahren zur Herstellung einer Sonnenblumenschrotfraktion F, die mindestens 50 Gew.-% Proteine, bezogen auf das Gesamttrockengewicht der Fraktion, und 10 Gew.-% oder weniger Rohfasern, bezogen auf das Gesamttrockengewicht der Fraktion, enthält, wobei das Verfahren die folgenden Schritte umfasst:
a) Herstellen eines Ausgangsmaterials durch Desagglomeration eines Sonnenblumenschrots, der mindestens 30 Gew.-% Protein, bezogen auf das Gesamttrockengewicht des Schrots, enthält und einen Feuchtigkeitsgehalt von weniger als 12 % aufweist, zu Teilchen, die kleiner als 5 mm sind;
b) sukzessives Sieben des erhaltenen Ausgangsmaterials, um mindestens die folgenden Fraktionen zu erhalten:
- Fraktion F-b1, in der die Teilchengröße von d1 bis d2 beträgt;
- Fraktion F-b2, in der die Teilchengröße von d3 bis d1 beträgt; und
- Fraktion F-b3, in der die Teilchengröße kleiner als d3 ist;
c) Desagglomerieren und sukzessives Sieben der Fraktion F-b1, um mindestens die folgenden Fraktionen zu erhalten:
- Fraktion F-c1, in der die Teilchengröße von d4 bis d5 beträgt; und
- Fraktion F-c2, in der die Teilchengröße kleiner als d4 ist;
d) Luftsieben der Fraktionen F-b2- und F-c1, um mindestens die folgenden Fraktionen zu erhalten:
- Fraktion F-d1, in der die Teilchengröße größer als d6 ist;
- Fraktion F-d2, in der die Teilchengröße von d7 bis d6 beträgt; und
- Fraktion F-d3, in der die Teilchengröße kleiner als d7 ist;
e) Desagglomerieren und sukzessives Sieben der
- Fraktion F-d1, um eine Fraktion F-e1 zu erhalten, in der die Teilchengröße kleiner als d8 ist; und/oder
- Fraktion F-d2, um eine Fraktion F-e2 zu erhalten, in der die Teilchengröße kleiner als d9 ist; und/oder
- Fraktion F-d3, um eine Fraktion F-e3 zu erhalten, in der die Teilchengröße kleiner als d10 ist;
f) und Mischen der Fraktionen F-b3, F-c2, F-e1 und/oder F-e2 und/oder F-e3, um die Fraktion F zu erhalten;
wobei
- d1 von 600 µm bis 1600 µm beträgt;
- d2 von 2000 µm bis 5000 µm beträgt;
- d3 von 150 µm bis 500 µm beträgt;
- d4 von 150 µm bis 500 µm beträgt;
- d5 von 600 µm bis 1600 µm beträgt;
- d6 von 800 µm bis 1000 µm beträgt;
- d7 von 500 µm bis 750 µm beträgt;
- d8 von 200 µm bis 600 µm beträgt;
- d9 von 200 µm bis 600 µm beträgt und
- d10 von 200 µm bis 600 µm beträgt,
und wobei die Teilchengröße Dv90 entspricht.

2. Verfahren nach Anspruch 1, **dadurch gekennzeichnet, dass** der Sonnenblumenschrot zu Teilchen desagglomeriert wird, die kleiner als 3 mm sind.

3. Verfahren nach Anspruch 1 oder 2, **dadurch gekennzeichnet, dass** der Sonnenblumenschrot einen Feuchtigkeitsgehalt von weniger als 10% aufweist.

4. Verfahren nach einem der Ansprüche 1 bis 3, **dadurch gekennzeichnet, dass** der Sonnenblumenschrot mindestens 34 % Protein enthält.

5. Verfahren nach einem der Ansprüche 1 bis 4, **dadurch gekennzeichnet, dass**:
- d1 von 650 µm bis 1200 µm beträgt;
- d2 von 2500 µm bis 4000 µm beträgt; und
- d3 von 150 µm bis 450 µm beträgt.

6. Verfahren nach einem der Ansprüche 1 bis 5, **dadurch gekennzeichnet, dass**:
- d4 von 150 µm bis 450 µm beträgt; und
- d5 von 700 µm bis 1500 µm beträgt.

7. Verfahren nach einem der Ansprüche 1 bis 6, **dadurch gekennzeichnet, dass**:
- d6 von 800 µm bis 900 µm beträgt; und
- d7 von 600 µm bis 700 µm beträgt.

8. Verfahren nach einem der Ansprüche 1 bis 7, **dadurch gekennzeichnet, dass** d8 von 200 µm bis 550 µm beträgt.

9. Verfahren nach einem der Ansprüche 1 bis 8, **dadurch gekennzeichnet, dass** d9 von 200 µm bis 550 µm beträgt.

10. Verfahren nach einem der Ansprüche 1 bis 9, **dadurch gekennzeichnet, dass** d10 von 200 µm bis 550 µm beträgt.

11. Durch das Verfahren nach Anspruch 1 erhältliche Sonnenblumenschrotfraktion, die mindestens 50 Gew.-% Proteine, bezogen auf das Gesamttrockengewicht der Fraktion, und weniger als 10 Gew.-% Rohfasern, bezogen auf das Gesamttrockengewicht der Fraktion, enthält.

12. Sonnenblumenschrotfraktion nach Anspruch 11, **dadurch gekennzeichnet, dass** sie mindestens 52 % Proteine enthält.

13. Sonnenblumenschrotfraktion nach Anspruch 11 oder 12, **dadurch gekennzeichnet, dass** sie weniger als 8 % Rohfasern enthält.

14. Sonnenblumenschrotfraktion nach einem der Ansprüche 11 bis 13, **dadurch gekennzeichnet, dass** die Durchmesser von Teilchen der Fraktion von 200 µm bis 600 µm betragen.

15. Verwendung einer Sonnenblumenschrotfraktion nach einem der Ansprüche 11 bis 14 zur Fütterung eines Tiers.

## Revendications

1. Procédé pour préparer une fraction F de tourteau de tournesol contenant au moins 50% en poids par rapport au poids sec total de la fraction de protéines et 10% ou moins en poids par rapport au poids sec total de la fraction de fibres brutes comprenant les étapes suivantes :
a) préparation d'une matière première par désagglomération d'un tourteau de tournesol contenant au moins 30% en poids par rapport au poids sec total du tourteau de protéine et ayant un taux d'humidité inférieur à 12% en des particules inférieures à 5 mm ;
b) tamisage successif de la matière première obtenue pour obtenir au moins les fractions suivantes :
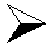 fraction F-b1 dans laquelle la taille des particules est comprise entre d1 et d2 ;
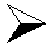 fraction F-b2 dans laquelle la taille des particules est comprise entre d3 et d1 ; et
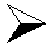 fraction F-b3 dans laquelle la taille des particules est inférieure à d3 ;
c) désagglomération et tamisage successif de la fraction F-b1 pour obtenir au moins les fractions suivantes :
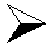 fraction F-c1 dans laquelle la taille des particules est comprise entre d4 à d5 ; et
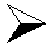 fraction F-c2 dans laquelle la taille des particules est inférieure à d4 ;
d) tamisage à l'air des fractions F-b2 et F-c1 pour obtenir au moins les fractions suivantes :
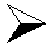 fraction F-d1 dans laquelle la taille des particules est supérieure à d6 ;
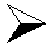 fraction F-d2 dans laquelle la taille des particules est comprise entre d7 et d6 ; et
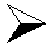 fraction F-d3 dans laquelle la taille des particules est inférieure à d7 ;
e) désagglomération et tamisage successif de
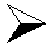 la fraction F-d1 pour obtenir une fraction F-e1 dans laquelle la taille des particules est inférieure à d8 ; et/ou
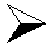 la fraction F-d2 pour obtenir une fraction F-e2 dans laquelle la taille des particules est inférieure à d9 ; et/ou
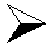 la fraction F-d3 pour obtenir une fraction F-e3 dans laquelle la taille des particules est inférieure à d10 ;
f) et mélange des fractions F-b3, F-c2, F-e1 et/ou F-e2 et/ou F-e3 pour obtenir la fraction F ;
dans lequel :
- d1 est compris entre 600 µm et 1600 µm ;
- d2 est compris entre 2000 µm et 5000 µm ;
- d3 est compris entre 150 µm et 500 µm ;
- d4 est compris entre 150 µm et 500 µm ;
- d5 est compris entre 600 µm et 1600 µm ;
- d6 est compris entre 800 µm et 1000 µm ;
- d7 est compris entre 500 µm et 750 µm ;
- d8 est compris entre 200 µm et 600 µm ;
- d9 est compris entre 200 µm et 600 µm ; et
- d10 est compris entre 200 µm et 600 µm,
et dans lequel la taille des particules correspond à Dv90.

2. Procédé selon la revendication 1, **caractérisé en ce que** le tourteau de tournesol est désagglomérée en des particules inférieures à 3 mm.

3. Procédé selon la revendication 1 ou 2, **caractérisé en ce que** le tourteau de tournesol possède un taux d'humidité inférieur à 10%.

4. Procédé selon l'une quelconque des revendications 1 à 3, **caractérisé en ce que** le tourteau de tournesol contient au moins 34% de protéine.

5. Procédé selon l'une quelconque des revendications 1 à 4, **caractérisé en ce que** :
- d1 est compris entre 650 µm et 1200 µm ;
- d2 est compris entre 2500 µm et 4000 µm ; et
- d3 est compris entre 150 µm et 450 µm.

6. Procédé selon l'une quelconque des revendications 1 à 5, **caractérisé en ce que** :
- d4 est compris entre 150 µm et 450 µm ; et
- d5 est compris entre 700 µm et 1500 µm.

7. Procédé selon l'une quelconque des revendications 1 à 6, **caractérisé en ce que** :
- d6 est compris entre 800 µm et 900 µm ; et
- d7 est copris entre 600 µm et 700 µm.

8. Procédé selon l'une quelconque des revendications 1 à 7, **caractérisé en ce que** d8 est compris entre 200 µm et 550 µm.

9. Procédé selon l'une quelconque des revendications 1 à 8, **caractérisé en ce que** d9 est compris entre 200 µm et 550 µm.

10. Procédé selon l'une quelconque des revendications 1 à 9, **caractérisé en ce que** d10 est compris entre 200 µm et 550 µm.

11. Fraction de tourteau de tournesol susceptible d'être obtenue par le procédé selon la revendication 1, contenant au moins 50% en poids par rapport au poids sec total de la fraction de protéines et moins de 10% en poids par rapport au poids sec total de la fraction de fibres brutes.

12. Fraction de tourteau de tournesol selon la revendication 11, **caractérisée en ce qu'**elle contient au moins 52% de protéines.

13. Fraction de tourteau de tournesol selon la revendication 11 ou 12, **caractérisée en ce qu'**elle contient moins de 8% de fibres brutes.

14. Fraction de tourteau de tournesol selon l'une quelconque des revendications 11 à 13, **caractérisée en ce que** les diamètres des particules de ladite fraction sont compris entre 200 µm et 600 µm.

15. Utilisation d'une fraction de tourteau de tournesol selon l'une quelconque des revendications 11 à 14 pour l'alimentation des animaux.
